# EUROPEAN PATENT APPLICATION

(11) **EP 2 727 462 A1**
(43) Date of publication of application: **07.05.2014**
(21) Application number: 13190941.8
(22) Date of filing: 30.10.2013
(51) Int. Cl.: A01K 1/015

(54) **Animal litter freshener**

(30) Priority: 05.11.2012 GB 201219841
(71) Applicant: Bob Martin (UK) Ltd., Yatton, Somerset BS49 4BS (GB)
(72) Inventor: Greaves, Rosemary Irene Whincup, Bristol, BS49 4BS (GB); Madan, Savi, Bristol, BS40 8RA (GB)
(74) Representative: Coles, Andrea Birgit

(57) **Abstract**

The invention relates to an animal litter additive product that comprises particles of autoclaved aerated concrete to improved odour control.

## Description

### Technical Field

The present invention relates to an animal litter product that can be added to an animal litter tray to prolong its life before the litter needs to be changed, which generally is needed because of its unacceptable odour.

### Background Art

Autoclaved aerated concrete (AAC), also known as autoclaved cellular concrete (ACC) or autoclaved lightweight concrete (ALC) is a well-known material having numerous applications, particularly in the building industry. It is generally cast to shape, as a block. This material will be referred to in the present specification as "autoclaved aerated concrete" or AAC.

AAC is made by mixing a silica source (SiO₂, quartz sand), a calcium source (CaO, lime) and/or cement, and water to form a cement paste. Both the silica and lime must be in the form of finely divided particles (e.g. about 100µm or less). When mixed together, the lime becomes hydrated and the high pH begins to dissolve the silica. This allows the calcium and silica to react and form calcium silicate hydrates (C-S-H). The cement paste is foamed, set, and then autoclaved. Suitable methods are described, for example, in US4395357 and US4275684. In an alternative method, aluminium powder is also added in an amount of less than 0.05%-0.08% by volume (0.4 Kgm⁻³). The aluminium reacts with the other components to form hydrogen gas, which cause the composition to foam and form pores in the AAC; it is this that provides AAC with its low density character. The hydrogen gas escapes to atmosphere and is replaced by air. Blocks are then placed in an autoclave chamber, during which hot pressurised steam hardens the block. In addition, the quartz sand reacts with calcium hydroxide to form calcium silicate hydrate (C-S-H), which provides AAC blocks with its high load-bearing strength.

Ideally, the SiO₂ to CaO ratio will be 1:0.83 (US4395357A gives a range of 1:0.8-1.1) in order to form tobermorite (5CaO.6SiO₂.5H₂O).

Depending on the recipe, the setting reaction may take anything from about 30 mins to several hours. The hydration of the lime is exothermic, and the temperature during the setting reaction will be in the region of 70-80°C. Once the batch of material is set it is demoulded and cut into blocks ready for autoclaving. Conversion of C-S-H gel to tobermorite occurs between 100-200°C under saturated steam pressures of around 12 bar for 6-10 hours.

The following ingredients may also be incorporated into the recipe: slaked lime (Ca(OH)₂), cement, anhydrite (CaSO₄, cement retarder), pulverised fuel ash (PFA, sand/cement replacement), paper ash (lime replacement).

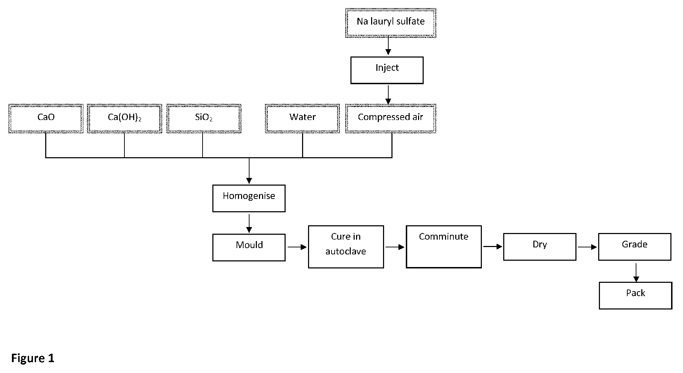

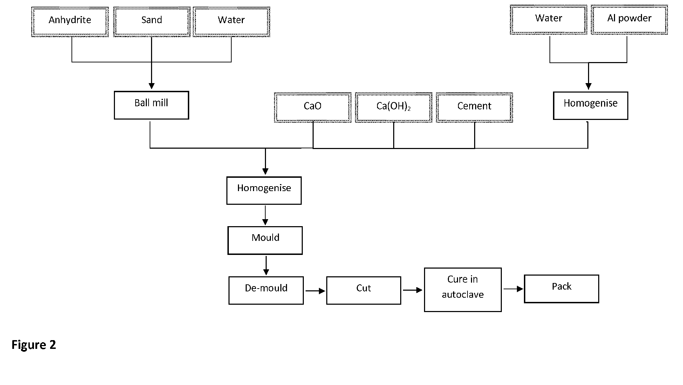

Figure 1 discloses a method of manufacturing AAC according to US4395357. Figure 2 discloses a manufacturing process for AAC used by construction products manufacturers (hydrolysis of aluminium).

AAC is widely produced by many manufacturers and the manufacturing parameters are generally understood in the art. By altering the relative amounts of the ingredients (sand, lime and/or cement, water and aluminium powder) and the autoclaving conditions, it is possible to adjust the strength, pore volume, pore size and amount of amorphous and crystalline C-S-H present in the finished AAC material.

AAC is also used, when broken up into particles of a size generally of 1-8mm, as an animal litter and there are several commercial cat litter products that are formed of AAC particles.

A product known as "litter freshener" is commercially available from the Applicant company under the trade mark Stayfresh®. It is added to a litter tray and keeps the litter fresher for longer by masking odour. It is made from particles of crushed limestone having a particle size of about 0.25 to 1.0 mm. It also includes a minor amount of an amorphous silica support carrying a perfume and/or an antibacterial agent and/or a preservative. This product generally has a smaller particle size than animal litter and is added to animal litter when fresh litter is added or, more usually, after the litter has been in use for some time to mask odour from the tray in order to avoid having to change all the litter in a litter tray.

### Disclosure of the Present Invention

The present invention provides a litter additive that is an improvement on the litter freshener product described above.

In accordance with the present invention, there is provided an animal litter additive that comprises particles of AAC having a particle size in the range of from 0.1 to 2 mm, e.g. 0.2 to 1mm or more narrowly 0.25 - 0.75mm. In the present specification, where a series of ranges is specified, an extreme value of one range can be combined with an extreme value of another range without departing from the scope of the present invention. This additive is to be distinguished from animal litter as such because of the smaller particle size, e.g. litters have particle sizes of 1-10mm and the freshener product preferably does not include a significant number of particles having a particle size in excess of 2mm or more preferably in excess of 1mm.

The present invention finds particular application in cat litters but it can also be used as a litter for other animals.

The present invention is based on the discovery that the use of AAC instead of limestone as the base of the litter freshener composition reduces the odour from urine and can extend the lifetime of the litter more effectively than the corresponding product using a limestone base. Alternatively, for a given litter extension time, the amount of perfume that needs to be added to the litter freshener product can be reduced, thereby reducing correspondingly the cost of manufacture of the product.

Unless otherwise stated, all percentages quoted in the specification in the present specification are based on the dry weight of the material concerned.

The AAC particles used in the litter freshener product can be derived by comminuting AAC blocks to the desired size, which is generally of 0.2-2mm. As used herein, the term "comminuting" is the process in which AAC, e.g. in the form of a solid AAC block, is reduced in size, e.g. by crushing, grinding, fracturing or other processes.). The cast AAC block may have a density of 390-450 kg/m³.

In the above process, reference is made to material having certain particle size ranges. It will be appreciated that it is not always possible to exclude particles that fall outside the ranges stated and therefore, in giving a particle size range in the present specification, it is intended to be understood that at least 90% (and more preferably at least 95%) by weight of the material will have particles falling within the specified particle size range.

It will also be appreciated that the particles may not be of spherical shape and therefore do not have a uniform diameter in all orientations. Accordingly, the particle sizes quoted in the present specification are those of particles that will pass (or will not pass) through a sieve having an opening of the appropriate width. Thus if the mesh in the sieve is square, the length of the side of the mesh opening is to be taken as the appropriately sized sieve. Grading into particle size can be performed in any known manner but is preferably performed by a sieving operation.

As mentioned above, the litter freshener product may include materials other than the AAC, although AAC (especially having the characteristics mentioned herein) should preferably amount to at least 85%, e.g. at least 90%, for example at least 95% by weight. However, it may also contain standard additives used in animal litter, e.g. one or more of: dyes, pigments, fillers, perfumes, antibacterial agents, clumping materials, absorbents, e.g. superabsorbent polymers, and preservatives. Liquid additives may be incorporated into the particles, e.g. by coating, including spraying, or may be provided on a separate carrier, e.g. a silica carrier and mixed with the particles. Finally, solid additives, may be added simply by mixing them with the AAC particles. The composition preferably includes an amount of perfume, antibacterial agents and preservatives, which is up to 5wt%, e.g. up to 2%, e.g. up to 1% and especially up to 0.1%.

### Example 1

Tests were performed to assess the ammoniacal odour control of litter fresheners.

A fresh ammonia solution was prepared prior to each test session by mixing 25ml of 1N sodium hydroxide, 25 ml of 10% ammonium acetate and 50ml distilled water.

500ml of a cat litter was placed in a 1 litre Buchner flask with its side nozzle blocked off with a short length of neoprene tubing and a plastic stopper and 10ml of ammonia test solution was added to the litter and the mouth of the flask was immediately sealed with a drilled rubber bung having a centre hole allowing entry of a Dräger sampling tube. This centre hole was closed with a stopper. The flask and contents were shaken for 30 seconds to ensure complete mixing and were then allowed to stand for 5 minutes. Meanwhile a 2/a Dräger ammonia gas detector tube having an ammonia detection range of 2-30ppm was inserted into a Dräger pump Accuro gas sampler, which consists of a bellows pump that can be used to pass gas to the Dräger tube.

After the 5 minutes absorption period, the sealing stopper was removed from the bung and the Dräger tube was inserted quickly to ensure that a good seal is made between the bung and the sampling tube. The amount of ammonia in the atmosphere in the flask (referred to as "residual ammonia") was measured in ppm by compressing and relaxing the pump bellows, according to the procedure for the ammonia tube. The Dräger tube provides a reading of the residual ammonia. The lower the test result, the better the material is at controlling ammoniacal odours, with better potential odour control being delivered by those materials that deliver results below the human perception detection threshold of 17ppm..

Using the above procedure, commercial Stayfresh®, which has a limestone base, was tested along with two litter freshener compositions, one having a base formed from AAC having a particle size of 0.5 to 1 mm and the other having a base formed from AAC having a particle size of 0.25 to 1 mm. In both the commercial Stayfresh® composition and the two AAC-based composition, identical amounts of Sipernat carrying butylated hydroxytoluene (BHT) and a perfume were added. Sipernat® is a commercially available, amorphous silica precipitate. The Sipernat, BHT, Perfume component is available commercially as a pre-mix. The results were as follows:

| **Litter Freshner Base** | **Residual Ammonia (ppm)** |
|---|---|
| Limestone, i.e.the Stayfresh® product | >30 ppm |
| AAC having a particle size of 0.5 to 1 mm | <2ppm |
| AAC having a particle size of 0.25 to 1 mm | <2ppm |

Therefore, it can be seen that the use of AAC in place of limestone as a base for litter freshener provides a substantial improvement in odour control.

### Example 2

This test was designed to investigate whether the perfume carrier, Sipernat, was necessary in a litter freshener formulation based on AAC rather than limestone. Avoiding the use of Sipernat would reduce the overall cost of the product.

Two compositions were tested; Composition 1 included AAC having a particle size of 0.25 to 1 mm and an amount of a Siperanat/BHT/perfume premix that is currently used in a known litter freshener composition (the Applicant's Real Mandarin Litter Fresh), whereas Composition 2 had an identical AAC base but the liquid BHT-perfume was sprayed directly onto the surface of the AAC rather than being supported on the Sipernat.

The strength of the scent of the two compositions was found to be indistinguishable from each other, thereby opening up the possibility of reducing the cost of the litter freshener by not including Sipernat.

### Example 3

A composition for use as a litter freshener was devised as follows:

| | | Broad Range | Narrow Range |
|---|---|---|---|
| AAC size fractions based on the total weight of the composition | 0.5-1mm | 30-100% | 45-75% |
| | 0.25-0.5 mm | 0-70% | 25-55% |
| | 0-0.25 mm | <1% | <0.75% |
| Siperanat/BHT/perfume premix | | 0.1-5 | 0.1-1 |
| Bulk density, kg/l | | 0.4 to 0.6 kg/l | 0.45-0.55kg/l |
| Residual ammonia (tested as above), ppm | | 0-5 ppm | 0-5 ppm |
| Moisture content wt% | | <15% | <12% |
| pH | | <10 | <9.5 |

As discussed above, the perfume need not be supported on a carrier, e.g. Sipernat, in which case the amounts of BHT and perfume respectively are:
BHT: 0.1 - 1 wt%, e.g. 0.2-0.3wt%, for example 0.25 wt% and
Perfume: 1x10⁻³ - 1x10⁻² wt%, e.g. 2.5x10⁻³ - 7.5x10⁻³ wt%, for example 6.3x10⁻³ wt%, but the precise amount will depend on the strength of the smell of the perfume.

### Example 4

An analysis of the composition of the AAC was conducted when the results were as follows:

| **Component** | **Phase** | **Proportion (wt%)** |
|---|---|---|
| Calcium Silicate Hydrate (C-S-H) | Tobermorite | 41.9 |
| Amorphous | C-S-H gel | 29.9 |
| Silica | Quartz | 21.9 |
| Calcium Carbonate | Calcite | 5.7 |
| Calcium Carbonate | Aragonite | - |
| Calcium Carbonate | Vaterite | - |
| Calcium Sulfate | Anhydrite | 0.7 |

Without wishing to be bound by any particular theory, it is believed that the improved odour control of the AAC in accordance with the present invention is due at least in part to the presence of the amorphous calcium silicate hydrate (C-S-H) present in the AAC. Amorphous C-S-H tends to have pore sizes in the range of 0.25 to 10 nm, which are believed to be particularly effective in trapping odours arising from urine.

## Claims

1. An animal litter additive that comprises:
particles of AAC wherein at least 85% of the particles have a particle size in the range of from 0.1 to 2 mm, e.g. 0.2 to 1mm, for example 0.25 - 0.75mm, and
a perfume and/or an antibacterial agent and/or a preservative, especially a perfume.

2. An animal litter additive as claimed in claim 1, wherein the perfume and/or antibacterial agent and/or preservative is supported on a carrier, e.g. a silica carrier, that is mixed with the AAC particles.

3. An animal litter additive as claimed in claim 1, wherein the perfume and/or antibacterial agent and/or preservative is absorbed on the AAC particles.

4. An animal litter additive as claimed in any preceding claim, wherein at least 90wt%, e.g. at least 95wt%, of the AAC particles have a particle size in the range of from 0.1 to 2 mm, e.g. 0.2 to 1mm, for example 0.25 - 0.75mm.

5. An animal litter additive as claimed in any preceding claim, wherein said particles of AAC form at least 85wt%, of the animal litter additive and optionally at least 90wt%, for example at least 95wt%.

6. An animal litter additive as claimed in any preceding claim, wherein said perfume and/or antibacterial agent and/or preservative is present in an amount of up to 5wt%, e.g. up to 2wt%, for example up to 1wt%.

7. An animal litter additive as claimed in any preceding claim, wherein the amount of amorphous calcium silicate hydrate phase in the AAC is greater than 20wt%, for example greater than 25wt%.

8. An animal litter additive as claimed in any preceding claim, which includes one or more additives selected from: dyes, pigments, fillers, clumping materials, and preservatives present in an amount up to, for example, 10 weight%.
